# EUROPÄISCHE PATENTANMELDUNG

(11) **EP 1 857 742 A2**
(43) Veröffentlichungstag der Anmeldung: **21.11.2007**
(21) Anmeldenummer: 07107991.7
(22) Anmeldetag: 11.05.2007
(51) Int. Cl.: F24C 7/08

(54) **Kochfeld mit einer Sensoreinrichtung**

(30) Priorität: 19.05.2006 DE 102006023704
(71) Anmelder: BSH Bosch und Siemens Hausgeräte GmbH, 81739 München (DE)
(72) Erfinder: Grätz, Franz, 83374, Traunwalchen (DE); Has, Uwe, 84579, Unterneukirchen (DE); Vetterl, Peter, 83355, Grabenstätt (DE)

(57) **Zusammenfassung**

Das Kochfeld besitzt eine Kochstellen aufweisende Kochfeldplatte (2) sowie eine Sensoreinrichtung (19), die im Strahlengang der von einem auf einer Kochstelle befindlichen Kochgefäß emittierten Infrarotstrahlung an der Kochfeldplatte (2) angeordnet ist.

Um die Sensoreinrichtung (19) ausschließlich der vom erhitzten Kochgefäß ausgehenden Infrarotstrahlung auszusetzen und störende thermische Einflüsse aus der Umgebung der Sensoreinrichtung (19) fern zu halten ist die Sensoreinrichtung (19) mit Ausnahme ihres Strahlungsempfängers durch Wärmedämmmittel (24) gegenüber ihrer Umgebung thermisch isoliert.

## Beschreibung

Die Erfindung bezieht sich auf ein Kochfeld mit einer Kochstellen aufweisenden Kochfeldplatte sowie mit wenigstens einer Sensoreinrichtung, die im Strahlengang der von einem auf einer Kochstelle befindlichen Kochgefäß emittierten Infrarotstrahlung an der Kochfeldplatte angeordnet ist.

Ein derartiges Kochfeld ist bekannt aus DE 195 37 909 A1 und DE 199 60 495 C1, wobei eine der sensorgesteuerten Garungseinheit bzw. dem Kochgefäß zugeordnete Sensoreinrichtung mit Infrarotsensor kochstellenbezogen leicht erhöht oberhalb des Kochfeldes angeordnet ist. Diese Sensoreinrichtung reagiert auf die vom Kochgefäß ausgehende Infrarotstrahlung, wobei die Sensoreinrichtung in einer gehäuseartigen Sensoreinheit angeordnet ist die etwa domartig ausgebildet in der Arbeitsstellung aus einer Öffnung des Kochfeldes z.B. einer Glaskeramikplatte ragt und in der Ruhestellung in dieser Öffnung flächenbündig zur Kochfeldplatte versenkt werden kann. Die Sensoreinrichtung befindet sich etwa im Eckenbereich des Kochfeldes und im Strahlengang der von mindestens einem auf einer Kochstelle befindlichen Kochgefäß emittierten Infrarotstrahlung. Die Sensoreinheit besitzt an einer der Kochstelle und dem Kochgefäß zugewandten Seite ein offenes Fenster, hinter dem sich der Strahlungsempfänger der Sensoreinrichtung befindet.

Mit derartigen Sensoreinrichtungen wird die Energie der Infrarotstrahlung detektiert und das Messergebnis als Steuersignal an eine die betreffende Kochstelle d.h. deren Heizelement, z.B. Strahlungsheizkörper, kontrollierende zentrale Steuereinrichtung des Kochfeldes übermittelt. Bekannte Sensoreinrichtungen dieser Art reagieren einerseits hauptsächlich auf die von der Außenwand des Kochgefäßes emittierte Infrarotstrahlung, andererseits aber auch auf die aus der Umgebung auf die Sensoreinrichtung z.B. über wärmeleitende, mit Heizelementen indirekt verbundene Bauteile des Kochfeldes, über thermische Einflüsse aus dem Umfeld der Sensoreinheit z.B. der Raumtemperatur der Küche usw. einwirkende Temperatur, so dass bei insbesondere sich stark verändernden Temperaturdifferenzen zwischen Infrarotstrahlung und Umgebungstemperatur d.h. der Eigentemperatur der Sensoreinrichtung die an die zentrale Steuereinrichtung übermittelten Messsignale mehr oder minder fehlerhaft sein können. Solche schädlichen Einflüsse sind gegeben z.B. bei rascher und konstanter Erhöhung der Abstrahltemperatur am Kochgefäß einerseits und andererseits bei träger Wärmeleitung vom Heizelement zur Sensoreinrichtung, bei plötzlicher Temperaturschwankung in der Küche usw.

Der vorliegenden Erfindung liegt die Aufgabe zugrunde, ein Kochfeld der eingangs genannten Art so auszubilden, dass eine von störenden äußeren Einflüssen möglichst unbehinderte Sensorik des zu kontrollierenden Kochgefäßes bzw. dessen Inhalt ermöglicht wird.

Diese Aufgabe wird gemäß der Erfindung bei einem Kochfeld der eingangs genannten Art dadurch gelöst, dass die Sensoreinrichtung mit Ausnahme ihres Strahlungsempfängers durch Wärmedämmmittel gegenüber ihrer Umgebung thermisch isoliert ist.

Durch diese zusätzlich zur die Sensoreinrichtung umgebenden und thermisch isolierenden Lufthülle bewirken die aktiv isolierend wirkenden Wärmedämmmittel eine bestmögliche thermische Isolation der Sensoreinrichtung gegenüber äußeren, nicht vom zu kontrollierenden Kochgefäß der betreffenden Kochstelle herrührenden thermischen Einflüssen, womit die Temperaturdifferenz unmittelbar an der Sensoreinrichtung zwischen Strahlungstemperatur und Umgebung und damit Eigentemperatur während des Kochprozesses im Wesentlichen konstant bleibt und somit weitestgehend exakte Messsignale aufgrund der Infrarotstrahlung des Kochgefäßes der Steuereinrichtung des Kochfeldes und damit der betroffenen Kochstelle übermittelt werden. Dadurch wird, insbesondere in der Anfahrphase des Kochprozesses verhindert, dass aufgrund von durch die Umgebungstemperatur bedingten störenden Einflüssen, die durch die verfälschten Messsignale der Steuereinrichtung übermittelten Temperaturangaben nicht exakt übereinstimmen mit den tatsächlichen Temperaturen im zu steuernden Kochgefäß bzw. dessen Inhalt. Vielmehr wird eine die Messsignale beeinflussende Einflussgröße, nämlich die Umgebungstemperatur weitestgehend - auf niedrigstem Niveau - konstant gehalten, so dass die vom Kochgefäß emittierte Infrarotstrahlung für die Steuerung des Kochprozesses in allen Kochprozess-Phasen maßgebend und zielführend ist.

Unterschiedliche, vorteilhafte Ausführungsbeispiele von Wärmedämmmitteln sind beispielhaft anhand der Patentansprüche 2 bis 5 aufgezeigt.

Die Erfindung ist besonders vorteilhaft anwendbar bei einem Kochfeld, bei welchem sich die Sensoreinrichtung in einer Sensoreinheit befindet, die in der Betriebsstellung aus einer Öffnung der Kochfeldplatte ragt und in der Ruhestellung in der Kochfeldplatte versenkt ist, da bei einer solchen Anordnung ein besonders inniger Kontakt zwischen den Bauteilen des Kochfeldes und der Sensoreinrichtung besteht.

Die Erfindung ist anhand eines in der Zeichnung dargestellten Ausführungsbeispieles nachstehend erläutert.

Es zeigt:
- Fig. 1: die perspektivische Darstellung eines Kochfeldes mit Sensoreinheit,
- Fig. 2: eine vergrößerte Schnittansicht einer Sensoreinheit gem. der Schnittlinie II-II in Fig. 1.

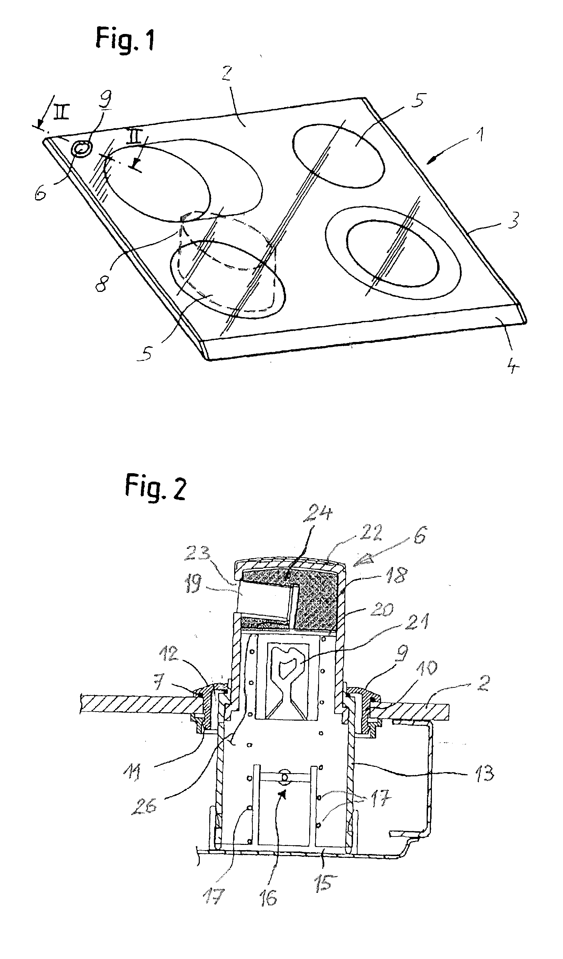

Ein Kochfeld 1 gem. Fig. 1 weist eine aus glaskeramischem Material bestehende Kochfeldplatte 2 auf, an deren beiden Seiten Randleisten 3 befestigt sind. Frontseitig endet die Kochfeldplatte 2 in einer Plattenfassette 4, auf bzw. an der üblicher Weise ein Anzeige- und/oder Bedienfeld angeordnet ist. Auf der Kochfeldplatte 2 sind vier beheizbare Kochstellen 5 vorgesehen und durch Dekor entsprechend markiert. Unterhalb der Kochfeldplatte 2 sind den Kochstellen 5 zugeordnet an sich bekannte Heizelemente in Form von Strahlungsheizelementen. Durch die Auswahl entsprechender Leistungsstufen werden die Heizleistungen der Heizelemente von einer Steuereinheit des Kochfeldes 1 in an sich bekannter Weise eingestellt. Im rückseitigen Eckbereich des Kochfeldes 1 ist eine Sensoreinheit 6 in einer Öffnung 7 (Fig. 2) der Kochfeldplatte 2 versenkbar montiert. Die Sensoreinheit 6 ist an ihrem Grundaufbau und in ihrer Grundfunktion aus der Druckschrift DE 195 37 909 A1 bekannt. In der Arbeitsstellung kann die Sensoreinheit 6 bzw. eine in dieser Sensoreinheit 6 angeordnete Sensoreinrichtung 19 (Fig. 2) die Temperatur eines auf der entsprechenden Kochstelle 5 abgestellten, gestrichelt angedeuteten Kochgefäßes 8 bzw. dessen Außenwandtemperatur erfassen. Den gemessenen Temperaturwert übermittelt die als Infrarotsensorik ausgebildete Sensoreinrichtung 19 an die nicht dargestellte Steuereinheit des Kochfeldes 1, die wiederum das entsprechende Heizelement entsprechend ansteuert. In der kreisförmigen Plattenöffnung 7 der Kochfeldplatte 2 ist ein z.B. metallischer Ring 9 gesteckt. Der Ring 9 weist eine sich unterhalb der Kochfeldplatte 2 erstreckende Zylinderwand 10 auf, deren plattenunterseitiger Endabschnitt einen Rastabschnitt 11 besitzt. Plattenoberseitig besitzt der Ring 9 einen sich umfangsseitig nach innen und nach außen erstreckenden Kragen 12 der außenseitig den oberen Plattenrand im Bereich der Plattenöffnung 7 übergreift und auf der Kochfeldplatte 2 ruht.

Die Sensoreinheit 6 weist gem. Fig. 2 ein rohrförmiges Aufnahmeteil 13 auf, das im Bereich eines plattenoberseitigen Absatzes über eine Dichtung an die Unterseite des Kragens 12 des Ringes 9 gedrückt ist. An einem mit dem unteren Endabschnitt des Aufnahmeteils 13 verschnappten Boden 15 ist eine an sich bekannte Rastvorrichtung 16 ausgebildet. Weiterhin stützt sich an dem Boden 15 eine Druckfeder 17 ab, in der die Energie gespeichert ist zur selbsttätigen Bewegung eines im Wesentlichen zylindrischen Gehäuses 18 der Sensoreinheit 6 aus der Ruhestellung unterhalb der Kochfeldplatte (Fig. 1) in die Arbeitsstellung oberhalb der Kochfeldplatte 2 (Fig. 2). In dem Aufnahmeteil 13 ist das erwähnte Gehäuse 18 vertikal verschiebbar geführt. Im Gehäuse 18 ist die Sensoreinrichtung 19 angeordnet, die durch ein im Gehäuse 18 vorgesehenes Fenster 23 einfallende Wärmestrahlung detektiert und in ein geeignetes Messsignal umformt. Die Infrarotsensorik, d.h. die Sensoreinrichtung 19 ist über eine elektrische Leitung 26 mit einer nicht gezeigten Steuereinheit des Kochfeldes 1 verbunden. Unterhalb einer parallel zum Boden 15 verlaufenden Trennwand 20 des Gehäuses 18 ist an dieser eine herzförmige, an sich bekannte Kulissenführung 21 befestigt. Diese wirkt zusammen mit der Rastvorrichtung 16 und gewährleistet nach leichtem Druck auf die Deckplatte 22 des Gehäuses 18 das selbsttätige Ausfahren des Gehäuses 18 und somit auch der Sensoreinrichtung 19 sowie ein Festhalten des Gehäuses 18 in der Ruheposition, wenn das Gehäuse 18 entsprechend weit nach unten in das Kochfeldinnere gedrückt wird.

Wie in Fig. 2 angedeutet ist der Raum des Gehäuses 18 zwischen Deckplatte 22 und Trennwand 20, in dem sich die Sensoreinrichtung 19 hinter dem Fenster 23 befindet, mit einem die Sensoreinrichtung 19, mit Ausnahme ihres Strahlungsempfängers unmittelbar hinter dem Fenster 23, umgebenden Wärmedämmmittel 24 ausgefüllt, womit die Sensoreinrichtung 19 mit der genannten Ausnahme nach allen Seiten hin thermisch isoliert ist. Dieses Wärmedämmmittel 24 kann aus einem thermisch isolierenden Schaumstoff bestehen, jedoch auch aus anderen Materialien z.B. durch eine Schüttung mit Isolierpartikeln oder dergleichen gebildet sein. In jedem Falle verhindert ein solches Wärmedämmmittel eine wesentliche Einflussnahme der Umgebungstemperatur auf die Sensoreinrichtung 19 sowohl was thermische Einflüsse von außen her anbelangt als auch was interne thermische Einflüsse angeht, die durch Wärmeleitung z.B. von dem angeschalteten Heizelement über den Unterbau der Kochfeldplatte 2 oder über diese selbst zur Sensoreinrichtung 19 gelangen könnten, wenn ein solches Wärmedämmmittel 24 nicht vorhanden wäre.

## Patentansprüche

1. Kochfeld (1) mit einer Kochstellen (5) aufweisenden Kochfeldplatte (2) sowie mit wenigstens einer Sensoreinrichtung (19), die im Strahlengang der von einem auf einer Kochstelle (5) befindlichen Kochgefäß (8) emittierten Infrarotstrahlung an der Kochfeldplatte (2) angeordnet ist, **dadurch gekennzeichnet, dass** die Sensoreinrichtung (19) mit Ausnahme ihres Strahlungsempfängers durch Wärmedämmmittel (24) gegenüber ihrer Umgebung thermisch isoliert ist.

2. Kochfeld nach Anspruch 1, **dadurch gekennzeichnet, dass** das Wärmedämmmittel (24) aus einem Schaumstoff besteht.

3. Kochfeld nach Anspruch 1, **dadurch gekennzeichnet, dass** das Wärmedämmmittel (24) aus einer Schüttung mit Isolierpartikeln besteht.

4. Kochfeld nach einem der vorherigen Ansprüche, **dadurch gekennzeichnet, dass** das Wärmedämmmittel als Formteil ausgebildet ist.

5. Kochfeld nach einem der vorherigen Ansprüche, **dadurch gekennzeichnet, dass** das Wärmedämmmittel (24) durch ein die Sensoreinrichtung aufnehmendes inhomogenes, vorzugsweise von Luftkammern durchsetztes Gehäuse gebildet ist.

6. Kochfeld nach einem der vorherigen Ansprüche, **dadurch gekennzeichnet, dass** die Sensoreinrichtung (19) sich in einer Sensoreinheit (6) befindet, die in der Betriebsstellung aus einer Öffnung (7) der Kochfeldplatte (2) ragt und in der Ruhestellung in der Kochfeldplatte (2) versenkt ist.
